# EUROPEAN PATENT APPLICATION

(11) **EP 1 182 881 A2**
(43) Date of publication of application: **27.02.2002**
(21) Application number: 01305019.0
(22) Date of filing: 08.06.2001
(51) Int. Cl.: H04N 7/24

(54) **Method and apparatus for transmiting broadcast programs, digital broadcast receiver, digital broadcast recorder, digital broadcast recorder/player**

(30) Priority: 30.06.2000 JP 2000198942
(71) Applicant: SONY CORPORATION, Tokyo 141 (JP)
(72) Inventor: Sato, Masahiko, Shinagawa-ku, Tokyo (JP)
(74) Representative: Robinson, Nigel Alexander Julian

(57) **Abstract**

In digital broadcasting capable of transmitting broadcast program information to a receiving apparatus, using an event information table (EIT) describing information about a program present on a MPEG stream, when a broadcast program is switched on the same stream, an event information table (EIT) is transmitted at reduced time intervals or an event identifier identifying broadcast program information is inserted into a program map table including program management information (PMT) so that the start of a broadcast program can be precisely detected without a delay even in the case where a plurality of broadcast programs are successively transmitted without a break.

## Description

The present invention relates to a method of transmitting broadcast program, a digital broadcast transmitter, a digital broadcast receiver, digital broadcast recorder, and a digital broadcast recorder/player. More specifically, the present invention relates to a method of transmitting broadcast program, a digital broadcast transmitter, a digital broadcast receiver, digital broadcast recorder, and a digital broadcast recorder/player, capable of precisely detecting the start of a broadcast program successively transmitted immediately after a previous broadcast program.

In conventional digital broadcasting according to the DVB (Digital Video Broadcasting) standard or the ARIB (Association of Radio Industries and Business) standard, broadcast program information is transmitted using an EIT (Event Information Table). The EIT has the syntax of "EIT actual/present|following" to describe information about a broadcast program being presently transmitted. Normally, the EIT is transmitted at time intervals of two to three seconds.

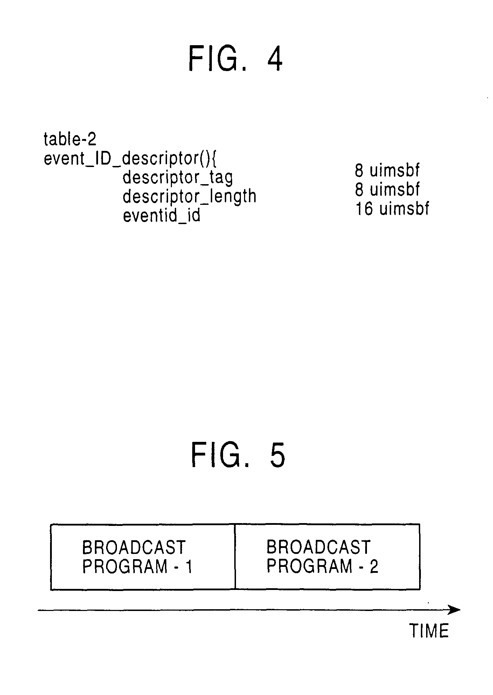

However, if first and second broadcast programs, which are successively transmitted on the same stream without a break as shown in Fig. 5, are recorded, there is a possibility that when the second broadcast program is played back later, the start of the second broadcast program is delayed by two or three seconds at worst because of the long time intervals of two or three seconds at which the broadcast program information (EIT actual/present|following) is transmitted.

Thus, there is a need for a technique that allows precise detection of the start of any of broadcast programs when playing back them after receiving and recording them via the same stream.

To address the above problem, the present invention provides a method of transmitting broadcast program information, a digital broadcast transmitter, a digital broadcast receiver, a digital broadcast recorder, and a digital broadcast recorder/player, as described below.
(1) A method of transmitting broadcast program information in digital broadcasting capable of transmitting broadcast program information to a receiving apparatus, using an event information table (EIT) describing information about a program present on an MPEG stream, the method including the step of, when a broadcast program is switched on the same stream, transmitting an event information table (EIT) at reduced time intervals so as to allow the start of a following broadcast program to be precisely detected.
(2) A method of transmitting broadcast program information, according to (1), wherein when a broadcast program is switched, an event information table (EIT) is transmitted at time intervals of the order of a few hundred milliseconds while broadcast program information is normally transmitted at time intervals of the order of a few seconds.
(3) A method of transmitting broadcast program information according to (1), wherein the digital broadcasting is in accordance with the DVB standard or the ARIB standard.
(4) A method of transmitting broadcast program information in digital broadcasting capable of transmitting broadcast program information to a receiving apparatus, using an event information table (EIT) describing information about a program present on an MPEG stream, the method including the step of, when a broadcast program is switched on the same stream, inserting the same event identifier as that used in the event information table (EIT) to identify broadcast program information into a program map table including program management information (PMT) so as to allow the start of a following broadcast program to be precisely detected.
(5) A method of transmitting broadcast program information according to (4), wherein the digital broadcasting is in accordance with the DVB standard or the ARIB standard.
(6) A digital broadcast transmitter capable of transmitting digital broadcasting in which broadcast program information is transmitted to a receiving apparatus, using an event information table (EIT) describing information about programs present on an MPEG stream, the digital broadcast transmitter including, at least, means for, when a broadcast program is switched on the same stream, transmitting an event information table (EIT) at reduced time intervals so as to allow the start of a following broadcast program to be precisely detected.
(7) A digital broadcast transmitter according to (6), wherein when a broadcast program is switched, an event information table (EIT) is transmitted at time intervals of the order of a few hundred milliseconds while broadcast program information is normally transmitted at time intervals of the order of a few seconds.
(8) A digital broadcast transmitter according to (6), wherein the digital broadcasting is in accordance with the DVB standard or the ARIB standard.
(9) A digital broadcast transmitter capable of transmitting digital broadcasting in which broadcast program information is transmitted to a receiving apparatus, using an event information table (EIT) describing information about programs present on an MPEG stream, the digital broadcast transmitter including, at least, means for, when a broadcast program is switched on the same stream, inserting the same event identifier as that used in the event information table (EIT) to identify broadcast program information into a program map table including program management information (PMT) so as to allow the start of a following broadcast program to be precisely detected.
(10) A digital broadcast transmitter according to (9), wherein the digital broadcasting is in accordance with the DVB standard or the ARIB standard.
(11) A digital broadcast receiver capable of receiving digital broadcasting in which broadcast program information is transmitted to a receiving apparatus, using an event information table (EIT) describing information about programs present on an MPEG stream, the digital broadcast receiver including, at least, means for receiving an event information table (EIT) transmitted, when a broadcast program is switched on the same stream, at reduced time intervals so as to allow the start of a following broadcast program to be precisely detected, and broadcast program start detection means for detecting the start of the broadcast program on the basis of the received event information table (EIT) transmitted at reduced time intervals.
(12) A digital broadcast receiver according to (11), wherein when a broadcast program is switched, an event information table (EIT) is transmitted at time intervals of the order of a few hundred milliseconds while broadcast program information is normally transmitted at time intervals of the order of a few seconds.
(13) A digital broadcast receiver according to (11), wherein the digital broadcasting is in accordance with the DVB standard or the ARIB standard.
(14) A digital broadcast receiver capable of receiving digital broadcasting in which broadcast program information is transmitted to a receiving apparatus, using an event information table (EIT) describing information about programs present on an MPEG stream, the digital broadcast receiver including, at least, means for extracting an event identifier which is the same as that used in the program map table including program management information (PMT) and inserted, when a broadcast program is switched on the same stream, into a program map table including program management information (PMT) to identify broadcast program information so as to allow the start of a following broadcast program to be precisely detected, and broadcast program start detection means for detecting the start of the broadcast program on the basis of the event identifier.
(15) A digital broadcast receiver according to (14), wherein the digital broadcasting is in accordance with the DVB standard or the ARIB standard.
(16) A digital broadcast recorder capable of receiving and recording digital broadcasting in which broadcast program information is transmitted to a receiving apparatus, using an event information table (EIT) describing information about programs present on an MPEG stream, the digital broadcast recorder including, at least, means for receiving an event information table (EIT) transmitted, when a broadcast program is switched on the same stream, at reduced time intervals so as to allow the start of a following broadcast program to be precisely detected, means for receiving a broadcast program by detecting the start of the broadcast program on the basis of the received event information table (EIT) transmitted at reduced time intervals and recording the broadcast program.
(17) A digital broadcast recorder according to (16), wherein when a broadcast program is switched, an event information table (EIT) is transmitted at time intervals of the order of a few hundred milliseconds while broadcast program information is normally transmitted at time intervals of the order of a few seconds.
(18) A digital broadcast recorder according to (16), wherein the digital broadcasting is in accordance with the DVB standard or the ARIB standard.
(19) A digital broadcast recorder capable of receiving and recording digital broadcasting in which broadcast program information is transmitted to a receiving apparatus, using an event information table (EIT) describing information about programs present on an MPEG stream, the digital broadcast recorder including, at least, means for extracting an event identifier which is the same as that used in the program map table including program management information (PMT) and inserted, when a broadcast program is switched on the same stream, into a program map table including program management information (PMT) to identify broadcast program information so as to allow the start of a following broadcast program to be precisely detected, and means for detecting the start of a broadcast program on the basis of the event identifier and recording the broadcast program.
(20) A digital broadcast recorder according to (19), wherein the digital broadcasting is in accordance with the DVB standard or the ARIB standard.
(21) A digital broadcast recorder/player capable of receiving, recording, and playing back digital broadcasting in which broadcast program information is transmitted to a receiving apparatus, using an event information table (EIT) describing information about programs present on an MPEG stream, the digital broadcast recorder/player including, at least, means for receiving an event information table (EIT) transmitted, when a broadcast program is switched on the same stream, at reduced time intervals so as to allow the start of a following broadcast program to be precisely detected, means for detecting the start of a broadcast program on the basis of the received event information table (EIT) transmitted at reduced intervals and recording the broadcast program, and means for playing back the recorded broadcast program.
(22) A digital broadcast recorder/player according to (21), wherein when a broadcast program is switched, an event information table (EIT) is transmitted at time intervals of the order of a few hundred milliseconds while broadcast program information is normally transmitted at time intervals of the order of a few seconds.
(23) A digital broadcast recorder/player according to (21), wherein the digital broadcasting is in accordance with the DVB standard or the ARIB standard.
(24) A digital broadcast recorder/player capable of receiving, recording, and playing back digital broadcasting in which broadcast program information is transmitted to a receiving apparatus, using an event information table (EIT) describing information about programs present on a MPEG stream, the digital broadcast recorder/player including, at least, means for extracting an event identifier which is the same as that used in the program map table including program management information (PMT) and inserted, when a broadcast program is switched on the same stream, into a program map table including program management information (PMT) to identify broadcast program information so as to allow the start of a following broadcast program to be precisely detected, means for detecting the start of a broadcast program on the basis of the event identifier and recording the broadcast program, and means for playing back the recorded broadcast program.
(25) A digital broadcast recorder/player according to (24), wherein the digital broadcasting is in accordance with the DVB standard or the ARIB standard.

In the present invention, as described above, at a transition between one broadcast program to another on the same stream, an event information table (EIT) is transmitted at reduced time intervals or an event identifier identifying a broadcast program is inserted in a program map table (PMT) thereby allowing the start of a broadcast program to be precisely detected when it is played back even in the case where a plurality of broadcast programs successively transmitted on the same stream are recorded.

Emnbodiments of the invention will now be described, by way of example only, with reference to the accompanying drawings in which:
Fig. 1 is a block diagram illustrating, in a simplified manner, the structure of a digital broadcast transmitter according to a first or second example embodiment of the present invention;
Fig. 2 illustrates an event information table (EIT);
Fig. 3 illustrates a program map table (PMT);
Fig. 4 is a diagram illustrating an example of an event identifier inserted in a program map table (PMT);
Fig. 5 is a schematic diagram illustrating broadcast programs which are successively transmitted on the same stream without a break;
Fig. 6 is a block diagram illustrating, in a simplified manner, the structure of a digital broadcast receiver according to a third example embodiment of the present invention;
Fig. 7 is a block diagram illustrating, in a simplified manner, the structure of a digital broadcast receiver according to a fourth example embodiment of the present invention
Fig. 8 is a block diagram illustrating, in a simplified manner, the structure of a digital broadcast recorder according to a fifthexample embodiment of the present invention;
Fig. 9 is a block diagram illustrating, in a simplified manner, the structure of a digital broadcast recorder according to a sixth example embodiment of the present invention;
Fig. 10 is a block diagram illustrating, in a simplified manner, the structure of a digital broadcast recorder/player according to a seventh example embodiment of the present invention; and
Fig. 11 is a block diagram illustrating, in a simplified manner, the structure of a digital broadcast recorder/player according to an eighth example embodiment of the present invention.

Example embodiments of a method of transmitting broadcast program information, a digital broadcast transmitter, a digital broadcast receiver, a digital broadcast recorder, and a digital broadcast recorder/player according to the present invention are described below with reference to the drawings.

A first embodiment of a digital broadcast transmitter using the method of transmitting broadcast program information has the capability of transmitting broadcast program information to a receiving apparatus, using an event information table (EIT) describing information about a program present on an MPEG stream, wherein when a broadcast program is switched on the same stream, an event information table (EIT) is transmitted at reduced time intervals so as to allow the start of a following broadcast program to be precisely detected.

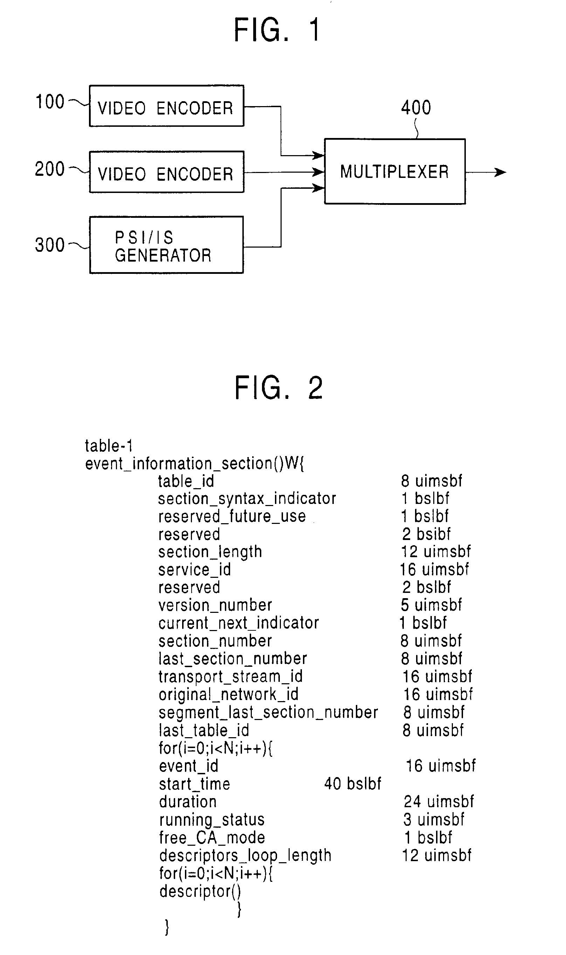

As shown in Fig. 1, the transmitter for transmitting digital broadcast includes a video encoder 100 for encoding a video signal, an audio encoder 200 for encoding an audio signal, a PSI (Program Specific Information)/SI generator 300 serving as a clock generator for generating a timing signal associated with a transport stream packet, and a multiplexer 400 for multiplexing the these signals.

In the present embodiment, the digital broadcasting uses the MPEG technique and is in accordance with the DVB (Digital Video Broadcasting) standard or the ARIB (Association of Radio Industries and Business) standard as described earlier with reference to the conventional technique. In the digital broadcasting, broadcast program information is transmitted to receiving apparatuses, using an event information table (EIT) describing information about a program present on an MPEG stream.

The event information table (EIT) describes broadcast program information. More specifically, as shown in Fig. 2, the event information table (EIT) is coded program attribute information describing various items of a broadcast program such as the content and the cast thereof. In the event information table, "event_id" represents the content of a broadcast program, such as news or a drama.

In the case where a plurality of broadcast programs are successively transmitted on the same streams without a break, the PSI/SI generator 300 generates an event information table (EIT) at sufficiently short intervals such as 100 msec during a period around a transition between one broadcast program to another. This makes it possible to precisely start any broadcast program when it is played back, even in the case where a plurality of broadcast programs successively transmitted on the same stream without a break have been recorded, because, at a transition between one broadcast program to another, an event information table (EIT) is transmitted at time intervals reduced to the order of 100 milliseconds as opposed to the long time intervals of the order of two or three seconds employed in the conventional technique.

A second embodiment of a digital broadcast transmitter using the method of transmitting broadcast program information is described below with reference to the drawing.

The second embodiment of the digital broadcast transmitter using the method of transmitting broadcast program information according to the present invention, as in the first embodiment, has the capability of transmitting MPEG digital broadcasting according to the DVB standard or the ARIB standard in which broadcast program information is transmitted to a receiving apparatus, using an event information table (EIT) describing information about a program present on an MPEG stream, wherein when a broadcast program is switched on the same stream, an event identifier is inserted into a program map table including program management information (PMT) to identify broadcast program information so as to allow the start of a following broadcast program to be precisely detected.

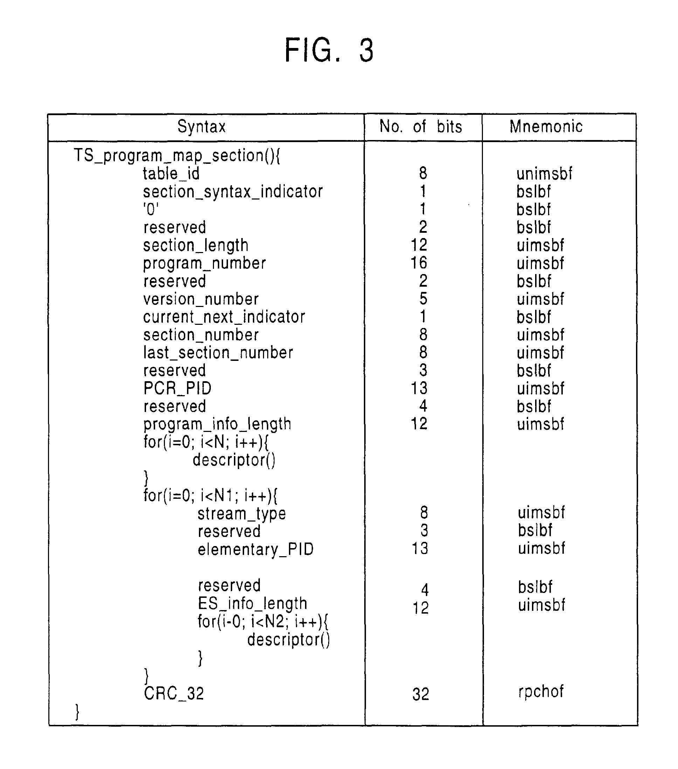

As shown in Fig. 3, a program map table (PMT) is one of four tables, that is, a program association table (PAT), a program map table (PMT), a network information table (NIT), and a conditional access table (CAT), used in an MPEG transport stream. The program map table (PMT) is transmitted at time intervals of about 100 msec. The program map table includes program management information about broadcast programs on a stream. In the program map table, programs are mapped and managed, for example, such that program-1 is mapped to an audio program and program-20 is mapped to a video program. In the program map table (PMT), an event identifier such as that shown in Fig. 4 is inserted using a descriptor.

In the present embodiment, as shown in Fig. 4, when a broadcast program is switched on a stream, an event identifier is inserted into a program map table (PMT) of a following broadcast program. More specifically, an event identifier "event_id" is inserted to identify a broadcast program being transmitted.

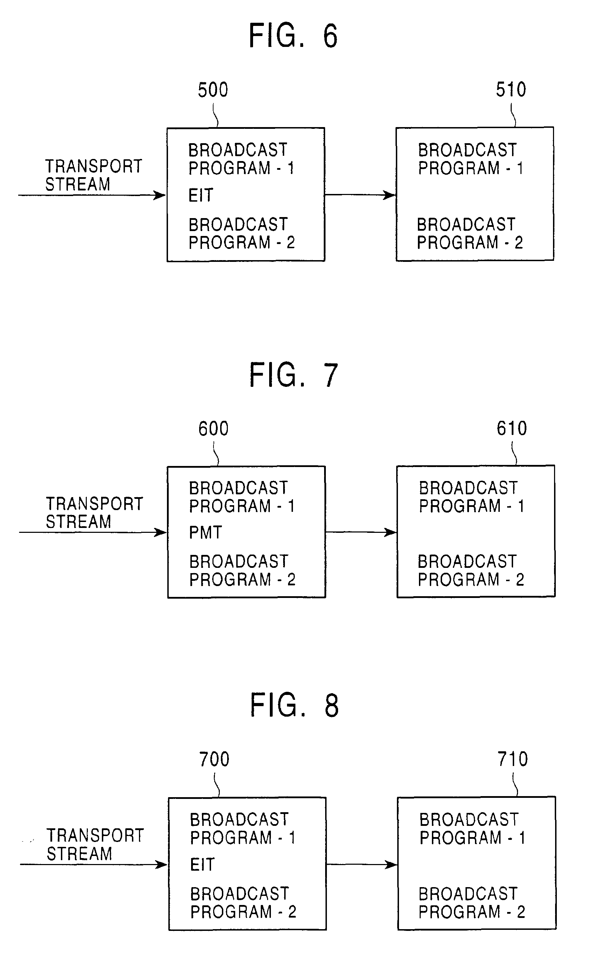

A digital broadcast receiver according to a third embodiment is described below with reference to Fig. 6.

The digital broadcast receiver of the third embodiment is capable of receiving digital broadcasting according to the DVB standard or the ARIB standard, in which broadcast program information is transmitted to receiving apparatus, using an event information table (EIT) describing information about a broadcast program on an MPEG stream, and the digital broadcast receiver includes, at least, an EIT receiver 500 serving as means for receiving an event information table (EIT) transmitted, when a broadcast program is switched on the same stream, at reduced time intervals so as to allow the start of a following broadcast program to be precisely detected, and a broadcast program start detector 510 serving as broadcast program start detection means for detecting the start of the broadcast program on the basis of the received event information table (EIT) transmitted at reduced time intervals.

When a broadcast program is switched, an event information table (EIT) is transmitted at time intervals of the order of a few hundred milliseconds (about 100 msec in this specific embodiment) while broadcast program information is normally transmitted at time intervals of the order of a few seconds. The event information table (EIT) is similar to that according to the first embodiment described above with reference to Fig. 2.

In the present embodiment, by receiving one of event information tables (EIT) transmitted at reduced time intervals at a transition between one broadcast program to another, it becomes possible to eliminate a delay in timing of starting the following broadcast program.

A digital broadcast receiver according to a fourth embodiment is described below with reference to Fig. 7.

The digital broadcast receiver of the fourth embodiment is capable of receiving digital broadcasting according to the DVB standard or the ARIB standard, in which broadcast program information is transmitted to receiving apparatus, using an event information table (EIT) describing information about a broadcast program on an MPEG stream, and the digital broadcast receiver includes, at least, an event identifier extractor 600 serving as means for extracting an event identifier inserted, when a broadcast program is switched on the same stream, in a program map table including program management information (PMT) to identify the broadcast program information so that the start of the broadcast program can be precisely detected, and a program start detector 610 serving as means for detecting the start of a broadcast program on the basis of the event identifier.

Thus, it becomes possible to extract an event identifier from a program map table (PMT) in a transport stream and properly detect and catch the start of a second broadcast program immediately after a first broadcast program. The program map table (PMT) is similar to that described above with reference to Fig. 3, and the event identifier is similar to that described above with reference to the second embodiment in conjunction with Fig. 4, and thus they are not described in further detail herein.

A digital broadcast recorder according to a fifth embodiment is described below with reference to Fig. 8.

The digital broadcast recorder of the fifth embodiment is capable of receiving and recording digital broadcasting according to the DVB standard or the ARIB standard, in which broadcast program information is transmitted to receiving apparatus, using an event information table (EIT) describing information about a broadcast program on an MPEG stream, and the digital broadcast recorder includes, at least, an EIT receiver 700 serving as means for receiving an event information table (EIT) transmitted, when a broadcast program is switched on the same stream, at reduced time intervals so that the start of the broadcast program can be precisely detected, and a program start detector/recorder 710 serving as means for detecting the start of a broadcast program on the basis of the received event information table (EIT) transmitted in reduced intervals and recording the received broadcast program.

When a broadcast program is switched, an event information table (EIT) is transmitted at time intervals of the order of a few hundred milliseconds (about 100 milliseconds in this specific embodiment) while broadcast program information is normally transmitted at time intervals of the order of a few seconds (two or three seconds in this specific embodiment).

In the digital broadcast recorder according to the present embodiment, one of event information tables (EIT) transmitted at reduced time intervals at a transition between one broadcast program to another is received, thereby ensuring that the start of a second broadcast program following a first broadcast program can be precisely detected without a delay and thus the first and second broadcast programs can be correctly recorded without a start timing error.

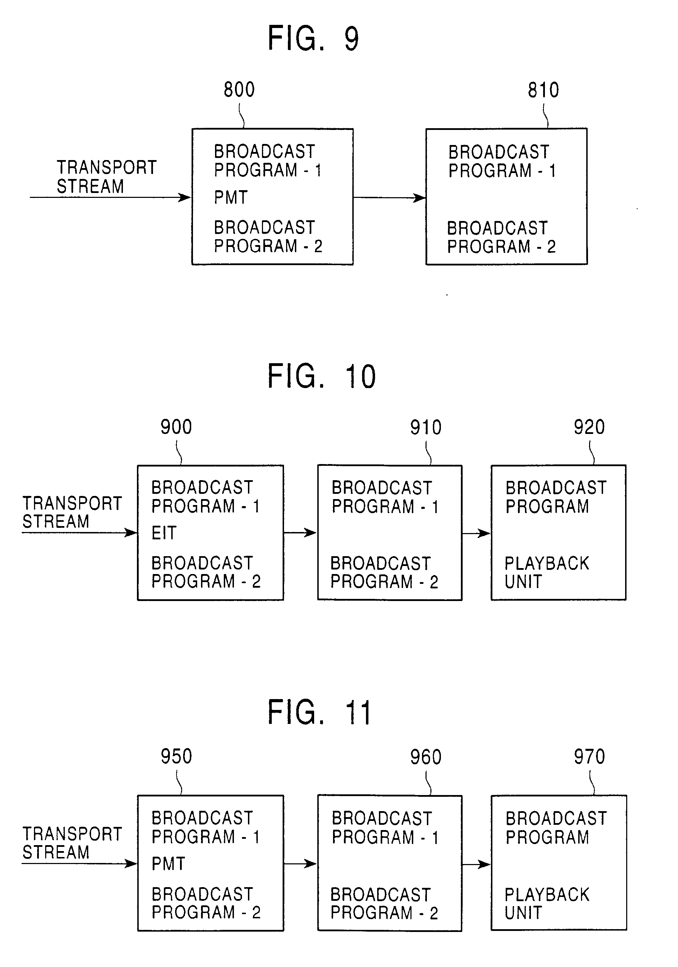

A digital broadcast recorder according to a sixth embodiment is described below with reference to Fig. 9.

The digital broadcast recorder of the sixth embodiment is capable of receiving and recording digital broadcasting according to the DVB standard or the ARIB standard, in which broadcast program information is transmitted to receiving apparatus, using an event information table (EIT) describing information about a broadcast program on an MPEG stream, and the digital broadcast recorder includes, at least, an event identifier extractor 800 serving as means for extracting an event identifier inserted, when a broadcast program is switched on the same stream, in a program map table including program management information (PMT) to identify the broadcast program information so that the start of the broadcast program can be precisely detected, and a program start detector/recorder 810 serving as means for detecting the start of a broadcast program on the basis of the event identifier and recording the broadcast program.

As described above, the digital broadcast recorder constructed in the above-described manner is capable of extracting an event identifier from a program map table (PMT) in a transport stream thereby ensuring that the start of a second broadcast program transmitted immediately after a first broadcast program is precisely detected without a delay, and thus the first and second broadcast programs can be properly recorded. The program map table (PMT) is similar to that described above with reference to Fig. 3, and the event identifier is similar to that described above with reference to the second embodiment in conjunction with Fig. 4, and thus they are not described in further detail herein.

A digital broadcast recorder/player according to a seventh embodiment is described below with reference to Fig. 10.

The digital broadcast recorder/player of the seventh embodiment is capable of receiving digital broadcasting according to the DVB standard or the ARIB standard, in which broadcast program information is transmitted to receiving apparatus, using an event information table (EIT) describing information about a broadcast program on an MPEG stream, and the digital broadcast recorder/player includes, at least, an EIT receiver 900 serving as means for receiving an event information table (EIT) transmitted, when a broadcast program is switched on the same stream, at reduced time intervals so that the start of the broadcast program can be precisely detected, a program start detector/recorder 910 serving as means for detecting the start of a broadcast program on the basis of the received event information table (EIT) transmitted in reduced intervals and recording the broadcast program, and a broadcast program player 920 serving as means for playing back the recorded broadcast program.

When a broadcast program is switched, an event information table (EIT) is transmitted at time intervals of the order of a few hundred milliseconds (about 100 milliseconds in this specific embodiment) while broadcast program information is normally transmitted at time intervals of the order of a few seconds (two or three seconds in this specific embodiment).

In the digital broadcast recorder/player according to the present embodiment, one of event information tables (EIT) transmitted at reduced time intervals at a transition between one broadcast program to another is received, thereby ensuring that the start of a second broadcast program following a first broadcast program can be precisely detected without a delay and thus the first and second broadcast programs can be correctly recorded without a start timing error, and also ensuring that the first and second broadcast programs can be played back without a delay at the start thereof.

A digital broadcast recorder/player according to an eighth embodiment is described below with reference to Fig. 11.

The digital broadcast recorder/player of the eighth embodiment is capable of receiving digital broadcasting according to the DVB standard or the ARIB standard, in which broadcast program information is transmitted to receiving apparatus, using an event information table (EIT) describing information about a broadcast program on an MPEG stream, and the digital broadcast recorder/player includes, at least, an event identifier extractor 950 serving as means for extracting an event identifier inserted, when a broadcast program is switched on the same stream, in a program map table including program management information (PMT) to identify the broadcast program information so that the start of the broadcast program can be precisely detected, a program start detector/recorder 960 serving as means for detecting the start of a broadcast program on the basis of the event identifier and recording the broadcast program, and a broadcast program player 970 serving as means for playing back the recorded broadcast program.

In the digital broadcast recorder/player according to the present embodiment, when first and second broadcast programs are successively transmitted without a break, the start of the second broadcast program is precisely detected by extracting the event identifier inserted in the program map table (PMT) in the transport stream, thereby ensuring that the first and second broadcast programs can be properly recorded without a start timing error, and also ensuring that the first and second broadcast programs can be played back without a delay at the start thereof. The program map table (PMT) is similar to that described above with reference to Fig. 3, and the event identifier is similar to that described above with reference to the second embodiment in conjunction with Fig. 4, and thus they are not described in further detail herein.

As described above, the present invention provides great advantages. That is, in the method of transmitting broadcast program information, the digital broadcast transmitter, the digital broadcast receiver, the digital broadcast recorder, and the digital broadcast recorder/player, according to the present invention, at a transition from a first broadcast program to a second broadcast program transmitted successively without a break, an event information table (EIT) associated with the second broadcast program is transmitted in reduced timer intervals or an event identifier is inserted in a program map table (PMT) to indicate that the second broadcast program has been started thereby ensuring that the start of the second broadcast program can be precisely detected without a delay even when the second broadcast program is transmitted immediately after the first broadcast program without a break.

## Claims

1. A method of transmitting broadcast program information in digital broadcasting capable of transmitting broadcast program information to a receiving apparatus, using an event information table (EIT) describing information about a program present on an MPEG stream,
said method including the step of, when a broadcast program is switched on the same stream, transmitting an event information table (EIT) at reduced time intervals so as to allow the start of a following broadcast program to be precisely detected.

2. A method of transmitting broadcast program information, according to Claim 1, wherein when a broadcast program is switched, an event information table (EIT) is transmitted at time intervals of the order of a few hundred milliseconds while broadcast program information is normally transmitted at time intervals of the order of a few seconds.

3. A method of transmitting broadcast program information, according to Claim 1, wherein said digital broadcasting is in accordance with the DVB standard or the ARIB standard.

4. A method of transmitting broadcast program information in digital broadcasting capable of transmitting broadcast program information to a receiving apparatus, using an event information table (EIT) describing information about a program present on an MPEG stream,
said method including the step of, when a broadcast program is switched on the same stream, inserting the same event identifier as that used in said event information table (EIT) to identify broadcast program information into a program map table including program management information (PMT) so as to allow the start of a following broadcast program to be precisely detected.

5. A method of transmitting broadcast program information, according to Claim 4, wherein said digital broadcasting is in accordance with the DVB standard or the ARIB standard.

6. A digital broadcast transmitter capable of transmitting digital broadcasting in which broadcast program information is transmitted to a receiving apparatus, using an event information table (EIT) describing information about programs present on an MPEG stream,
said digital broadcast transmitter including, at least, means for, when a broadcast program is switched on the same stream, transmitting an event information table (EIT) at reduced time intervals so as to allow the start of a following broadcast program to be precisely detected.

7. A digital broadcast transmitter according to Claim 6, wherein when a broadcast program is switched, an event information table (EIT) is transmitted at time intervals of the order of a few hundred milliseconds while broadcast program information is normally transmitted at time intervals of the order of a few seconds.

8. A digital broadcast transmitter according to Claim 6, wherein said digital broadcasting is in accordance with the DVB standard or the ARIB standard.

9. A digital broadcast transmitter capable of transmitting digital broadcasting in which broadcast program information is transmitted to a receiving apparatus, using an event information table (EIT) describing information about programs present on an MPEG stream,
said digital broadcast transmitter including, at least, means for, when a broadcast program is switched on the same stream, inserting the same event identifier as that used in said event information table (EIT) to identify broadcast program information into a program map table including program management information (PMT) so as to allow the start of a following broadcast program to be precisely detected.

10. A digital broadcast transmitter according to Claim 9, wherein said digital broadcasting is in accordance with the DVB standard or the ARIB standard.

11. A digital broadcast receiver capable of receiving digital broadcasting in which broadcast program information is transmitted to a receiving apparatus, using an event information table (EIT) describing information about programs present on an MPEG stream,
said digital broadcast receiver including, at least, means (500) for receiving an event information table (EIT) transmitted, when a broadcast program is switched on the same stream, at reduced time intervals so as to allow the start of a following broadcast program to be precisely detected, and broadcast program start detection means (510) for detecting the start of the broadcast program on the basis of said received event information table (EIT) transmitted at reduced time intervals.

12. A digital broadcast receiver according to Claim 11, wherein when a broadcast program is switched, an event information table (EIT) is transmitted at time intervals of the order of a few hundred milliseconds while broadcast program information is normally transmitted at time intervals of the order of a few seconds.

13. A digital broadcast receiver according to Claim 11, wherein said digital broadcasting is in accordance with the DVB standard or the ARIB standard.

14. A digital broadcast receiver capable of receiving digital broadcasting in which broadcast program information is transmitted to a receiving apparatus, using an event information table (EIT) describing information about programs present on an MPEG stream,
said digital broadcast receiver including, at least, means (600) for extracting an event identifier which is the same as that used in the program map table including program management information (PMT) and inserted, when a broadcast program is switched on the same stream, into a program map table including program management information (PMT) to identify broadcast program information so as to allow the start of a following broadcast program to be precisely detected, and broadcast program start detection means (610) for detecting the start of the broadcast program on the basis of said event identifier.

15. A digital broadcast receiver according to Claim 14, wherein said digital broadcasting is in accordance with the DVB standard or the ARIB standard.

16. A digital broadcast recorder capable of receiving and recording digital broadcasting in which broadcast program information is transmitted to a receiving apparatus, using an event information table (EIT) describing information about programs present on an MPEG stream,
said digital broadcast recorder including, at least, means (700) for receiving an event information table (EIT) transmitted, when a broadcast program is switched on the same stream, at reduced time intervals so as to allow the start of a following broadcast program to be precisely detected, and means (710) for receiving a broadcast program by detecting the start of the broadcast program on the basis of said received event information table (EIT) transmitted at reduced time intervals and recording said broadcast program.

17. A digital broadcast recorder according to Claim 16, wherein when a broadcast program is switched, an event information table (EIT) is transmitted at time intervals of the order of a few hundred milliseconds while broadcast program information is normally transmitted at time intervals of the order of a few seconds.

18. A digital broadcast recorder according to Claim 16, wherein said digital broadcasting is in accordance with the DVB standard or the ARIB standard.

19. A digital broadcast recorder capable of receiving and recording digital broadcasting in which broadcast program information is transmitted to a receiving apparatus, using an event information table (EIT) describing information about programs present on an MPEG stream,
said digital broadcast recorder including, at least, means for extracting an event identifier which is the same as that used in the program map table including program management information (PMT) and inserted, when a broadcast program is switched on the same stream, into a program map table including program management information (PMT) to identify broadcast program information so as to allow the start of a following broadcast program to be precisely detected, and means for detecting the start of a broadcast program on the basis of said event identifier and recording said broadcast program.

20. A digital broadcast recorder according to Claim 19, wherein said digital broadcasting is in accordance with the DVB standard or the ARIB standard.

21. A digital broadcast recorder/player capable of receiving, recording, and playing back digital broadcasting in which broadcast program information is transmitted to a receiving apparatus, using an event information table (EIT) describing information about programs present on an MPEG stream,
said digital broadcast recorder/player including, at least, means (900) for receiving an event information table (EIT) transmitted, when a broadcast program is switched on the same stream, at reduced time intervals so as to allow the start of a following broadcast program to be precisely detected, means (910) for detecting the start of a broadcast program on the basis of said received event information table (EIT) transmitted at reduced intervals and recording said broadcast program, and means (920) for playing back said recorded broadcast program.

22. A digital broadcast recorder/player according to Claim 21, wherein when a broadcast program is switched, an event information table (EIT) is transmitted at time intervals of the order of a few hundred milliseconds while broadcast program information is normally transmitted at time intervals of the order of a few seconds.

23. A digital broadcast recorder/player according to Claim 21, wherein said digital broadcasting is in accordance with the DVB standard or the ARIB standard.

24. A digital broadcast recorder/player capable of receiving, recording, and playing back digital broadcasting in which broadcast program information is transmitted to a receiving apparatus, using an event information table (EIT) describing information about programs present on an MPEG stream,
said digital broadcast recorder/player including, at least, means (950) for extracting an event identifier which is the same as that used in the program map table including program management information (PMT) and inserted, when a broadcast program is switched on the same stream, into a program map table including program management information (PMT) to identify broadcast program information so as to allow the start of a following broadcast program to be precisely detected, means (960) for detecting the start of a broadcast program on the basis of said event identifier and recording said broadcast program, and means (970) for playing back said recorded broadcast program.

25. A digital broadcast recorder/player according to Claim 24, wherein said digital broadcasting is in accordance with the DVB standard or the ARIB standard.
